# EUROPEAN PATENT APPLICATION

(11) **EP 4 174 994 A1**
(43) Date of publication of application: **03.05.2023**
(21) Application number: 21205362.3
(22) Date of filing: 28.10.2021
(51) Int. Cl.: H01M 8/18

(54) **TUNABLE REDOX FLOW BATTERY**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: CUYPERS, Ruud, 2595 DA `s-Gravenhage (NL); GOETHEER, Earl Lawrence Vincent, 2595 DA `s-Gravenhage (NL); ANASTASOPOL, Anca, 2595 DA `s-Gravenhage (NL); PEREZ GALLENT, Elena, 2595 DA `s-Gravenhage (NL); TURK, Susan, 2595 DA `s-Gravenhage (NL); KALKMAN, Arie Jacobus, 2595 DA `s-Gravenhage (NL); VAN BERKEL, Franciscus Petrus Felix, 2595 DA `s-Gravenhage (NL); ZAFFARONI, Riccardo, 2595 DA `s-Gravenhage (NL)
(74) Representative: V.O.

(57) **Abstract**

The invention is directed to a redox flow battery that exhibits a tunable power output and/or tunable storage capacity, said redox flow battery comprising an anodic compartment and a cathodic compartment that respectively comprise an anolyte fluid and a catholyte fluid of which at least one comprises a dispersion of particles of a redox-active component, wherein said redox flow battery further comprises a tunable agitation device that is configured to controllably gradually agitate at least part of said dispersion. Further, the invention is directed to a method of operating the redox flow battery, for example by changing the agitation frequency of said tunable agitation device and/or by changing the displacement volume of the agitating device.

## Description

The invention is directed to a redox flow battery (RFB) and a method for operating said battery. In particular, the invention is directed to a RFB having a tunable power output and storage capacity.

Redox flow batteries (RFBs) can be used for large-scale electricity storage, where the storage volume (governing battery capacity) is separated from the reaction cell (governing battery power). In RFBs, redox-active components in liquid are pumped from the storage to the reaction cell where they are reacted to generate electrical energy. Current commercial RFBs utilize typically vanadium as main redox-active component in solution, but organic-based redox-active components such a TEMPO-analogues (US 2018/03301363), methylene blue (Kosswattaarachchi and Cook, ChemElectroChem 5 (2018) 22, 3437-3442) and redox-active polymers (Yan et al. Nature Communications (2019) 10;2513) have also been proposed.

To match electricity supply and demand, it is desired to provide RFBs which are tunable in power delivery and uptake and tunable in capacity. However, no solutions to increase the power of batteries such as RFBs are known other than increasing electrode area to increase the possible currents. This is however cumbersome, costly and complex, and typically requires downtime of the battery.

It is an object of the present invention to provide a RFB that is better tunable in power and/or storage capacity than is possible with the known RFBs. The present inventors realized that this object can be achieved by providing the RFB with a dispersion of redox-active components that is circulated through the RFB and tunably agitating this dispersion. It was found that a change of agitation of the dispersion leads to a change in the power output and/or storage capacity of the RFB.

Without wishing to be bound by theory, the inventors believe that the intensity of agitation and/or agitation frequency influences the number of particles and optionally dissolved molecules that can reach the electrodes of the RFB. At high agitation frequencies, the particles can more readily reach the electrodes of the RFB thereby more quickly replenish spent redox-active component and increase the current that can be generated with the RFB. In contrast, at lower agitation frequencies, the particles less easily reach the electrodes. For example, at lower frequencies, parts of the particles can settle thereby basically rendering these particles inactive as they cannot take part in the redox reaction anymore. The same effect can be achieved with agitation intensity. And in similar fashions, the agitation may advantageously influence the battery capacity.

Accordingly, the present invention is directed to a redox flow battery comprising an anodic compartment and a cathodic compartment that respectively comprise an anolyte fluid and a catholyte fluid of which at least one comprises a dispersion of particles of a redox-active component, wherein said redox flow battery further comprises a tunable agitation device that is configured to controllably gradually agitate at least part of said dispersion.

The term RFB is used in the context of the present invention in its broadest meaning. It may accordingly comprise one or more cells wherein the redox-active components in the anolyte and the catholyte fluid can react.

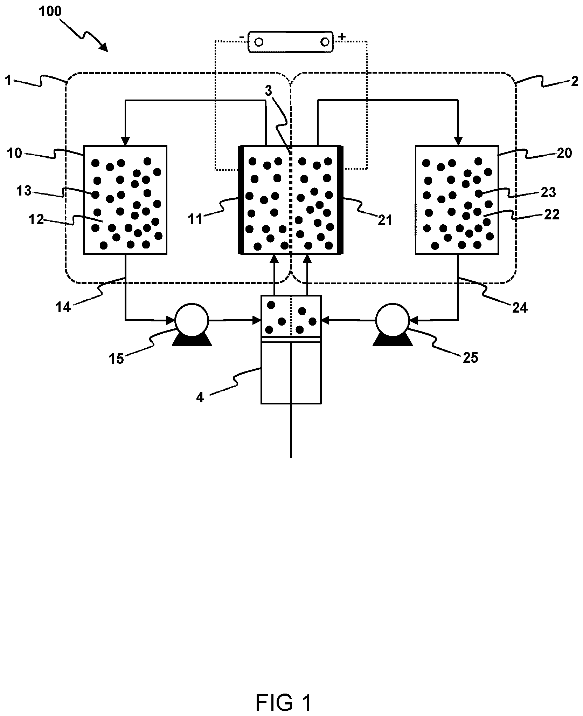

In a preferred embodiment, as illustrated in Figure 1, the redox flow battery (100) comprises an anodic compartment (1) that comprises an anolyte fluid tank (10), an anodic current collector (11) and an anolyte fluid (12), and a cathodic compartment (2) that comprises a catholyte fluid tank (20), a cathodic current collector (21) and a catholyte fluid (22). The cathodic and anodic collectors are typically separated by a membrane (3), preferably an anionic or a cationic exchange membrane, more preferably a proton exchange membrane. The membrane may also be a physical separator (e.g. a sieve) to separate the different particles species based on their size. The anolyte may comprise particles (13) of a redox-active component, just as the catholyte may comprise particles (23) of a redox-active component. It may be appreciated that these respective components may be chemically the same or different (*vide infra*).The RFB typically further comprises an anolyte circuit (14) that is configured to circulate the anolyte in the anolyte compartment. To this end, the anolyte circuit may comprise an anolyte circulation means such as a peristaltic pump (15). Similarly, the RFB typically further comprises a catholyte circuit (24) that is configured to circulate the catholyte in the catholyte compartment with a catholyte circulation means such as a peristaltic pump (25). Further, the RFB comprises a tunable agitation device (4) that is configured to controllably gradually agitate at least part of said dispersion. Preferably, the agitation device can function independently from the anolyte and catholyte circulation means that may be present to circulate the anolyte and catholyte in through the anolyte and catholyte circuits. As such, if the agitation device is turned off to disable agitation by this device, the anolyte and catholyte can still be led through the anolyte and catholyte circuits. In a particular embodiment, the anolyte and catholyte circulation means and the agitation device are integrated in a single unit in the battery

The agitation device is configured to controllably gradually agitate at least part of said dispersion. With controllable gradual agitation is herein meant that the degree of agitation can be controlled in a gradual manner, *viz.* its value can be set by more than on/off. The gradual control may be continuous, stepwise or a combination thereof. For example, a peristaltic pump with nothing more than an on/off switch is not an agitation device in accordance with the present invention as this does not allow tuning the power output and/or storage capacity of the RFB. Thus, in principle, any type of agitation device that can controllably agitate the dispersion in a gradual manner such that the power and/or storage capacity of the RFB is influenced can be used in the present invention. The agitation device must therefore at least be able to controllably cause turbulence of the anolyte to reinvigorate settled particles. Specific examples of suitable tunable agitation devices include pulsating pumps, for example diaphragm pumps, variable displacement pumps, stirring devices, vibration devices, ultrasonic sound generating devices, piezo-electric pulsation devices and combinations thereof. The RFB may comprise one agitation device or a plurality of different or similar agitation devices that may each be independently controlled.

The tunable agitation device in the present invention preferably at least controllably agitates the dispersion in the anolyte fluid tank and/or catholyte fluid tank wherein the dispersion is present as this are sections wherein most particles can generally settle and thus where the agitation may have the largest effect on the power output and/or storage capacity of the RFB.

In preferred embodiments, the agitation device comprises a pulsating agitation device, more preferably a pulsating pump. The pulsating pump can be used in conjunction with one or more positive-displacement pumps, as also illustrated in Figure 1. A combination of positive-displacement pumps with a diaphragm pump in another application (*i.e.* an electrolytic reactor) is described in Pérez-Gallent et al. Industrial & Engineering Chemistry Research 59 (2020) 13, 5648-5656. However, this combination can advantageously be used for the present invention as well.

It was advantageously found that the pulsating pump may agitate the particles throughout the circuits with which the pulsating pump is in fluid connection. Moreover, a pulsating pump beneficially provides a lower frequency than alternatives such as ultrasonic sound generating devices and piezo-electric pulsation devices.

Controllable agitation herein means that the agitation can be controlled to an extend that goes beyond agitation simply being present or absent. The manner that the agitation device can be controlled and tuned depends on the type of agitation device that is used. Most agitation devices, including pulsating pumps, stirring devices, vibration devices, ultrasonic sound generating devices and piezo-electric pulsation devices provide frequent recurring agitations that can be quantified with a frequency and intensity (or amplitude). Preferably, the agitation device exhibits a controllable frequency such that changing the power and/or storage capacity of the redox flow battery can be achieved by changing the agitation frequency of said tunable agitation device. For example, the pumping frequency of a diaphragm pump can be set in a range of 0 to 50 Hz, preferably 0 to 25 Hz, more preferably 0 to 10 Hz. At zero Hz, no agitation takes place while at 10 Hz, maximum agitation takes place.

In a preferred embodiment, the agitation device exhibits a controllable displacement volume such that changing the power and/or storage capacity of the redox flow battery can be achieved by changing the stroke size of said tunable agitation device. The displacement volume is the volume of the dispersion that is displaced in a certain time by the agitation device. For example, the agitation device may suitably be a variable displacement pump of which the amount of fluid pumped per revolution of the pump's input shaft can be varied while the pump is running.

The dispersed particles used in the present invention are formed of one or more redox-active components. At least one of the anolyte and catholyte fluid comprise dispersed particles, but it is preferred that both these fluids comprises dispersed particles of the redox-active component. The term redox-active component is used herein to describe the reactive components in the anodic fluid, the cathodic fluid or both. RFBs with particulates are also known in the art as solid dispersion RFBs. In principle, any type of redox-active component can be used, but it is preferred the catholyte and anolyte fluids are based on organic redox-active compounds. More preferably, the catholyte fluid comprises one or more redox-active compounds selected from the group consisting of methylthioninium salts (e.g. methylene blue), polyhydroquinone and/or an aminoxyl radicals, even more preferably a piperidinyloxyl radical, most preferably a 2,2,6,6-tetraalkylpiperidin-1-yl)oxyl radical that is optionally substituted at the 4-position, e.g. a 2,2,6,6-tetramethylpiperidin-1-yl)oxyl radical that is substituted at the 4-position with a hydroxy group (4-hydroxy-TEMPO). In US 2018/0331363, which is incorporated herein in its entirety, a suitable 2,2,6,6-tetraalkylpiperidin-1-yl)oxyl radical that is substituted at the 4-position is described.

The anolyte fluid preferably comprises one or more redox-active compounds selected from the group consisting of dibenzo annulated pyrazine compounds (phenazine and derivatives thereof), methylthioninium salts (e.g. methylene blue), viologen such as paraquat, a conductive polymer such as naphtalene-1,4,5,8-tetracarboxylic acid dianhydride-ethylene diamine copolymer, polyaniline and polypyrrole and combinations thereof.

The anolyte and catholyte may also comprise the same redox-active compound, e.g. the TEMPO/phenazine combi-molecule as described by Winsberg et al. in ACS Energy Lett. 1 (2016) 5, 976―980 and the diaminoanthraquinones as described by Potash et al. J. Electrochem. Soc. 163 (2016) A338.

In a typical embodiment, the anolyte and catholyte fluids comprise an electrolyte solvent (e.g. water) in which the redox-active compound is dissolved and/or dispersed. The fluid or fluids that comprise dispersed particles of the respective redox-active compound comprises said redox-active compound in an amount that is higher than the solubility of the redox-active compound in said fluid at the required conditions (*e.g*. temperature). Without wishing to be bound or limited by theory, the redox-active compounds may undergo the redox reaction in a dissolved state, resulting in a temporarily lean fluid near the anolyte or catholyte current collector and creating a need to replenish the current collector with fresh, reactive redox-active compound. This replenishment is believed to be accelerated or facilitated by providing more particles. In other words, agitating provides more accessible particles (*i.e.* particles that can participate in the redox reaction, either directly or indirectly by dissolvement first), which result in a higher concentration of reactive redox-active compound (both dissolved and dispersed) and concomitantly in a higher current, storage capacity, and/or power of the RFB.

The influence of the agitation is relatively large for suspensions that have fast kinetics of dissolution and likely (but not necessarily) very small particle size. Also for this reason, the redox-active component preferably comprises organic redox-active components as the solubility and reactivity of these organic compound can desirably be tuned.

In a particular embodiment, the redox-active compound is immobilized onto a solid support particulate which as a whole can be present as said particles in the RFB. This embodiment is particularly beneficial as the effect of agitation may be particularly large because the entirety of the redox-active compound that is immobilized on a solid support particle (*e.g.* a carrier particles) come into play (*i.e.* is accessible) once this particle is near the electrode but will be inaccessible if not near the electrode. In a preferred embodiment of this particular embodiment, said solid support is electrically conductive.

The power and/or storage capacity of the RFB may further be tunable by regulating the temperature and/or pressure of the anolyte and/or of the catholyte fluid. Accordingly, the RFB of the present invention preferably further comprises a temperature control device and/or pressure control device configured to controllably set, respectively, the temperature and/or pressure of the anolyte and/or of the catholyte fluid. The temperature of the fluids may for example be controlled by controlling the temperature of the tanks, the anodic compartment, the cathodic compartments or a combination thereof. The temperature and pressure may influence the electrical conductivity, the physical state (*i.e.* solid, liquid, semi-solid, etc.), solubility of the redox-active compounds, and the like of the anolyte and/or catholyte fluids, which in turn influence the current, potential, and/or power of the RFB.

In a further aspect, the invention is directed to a method of operating the redox flow battery comprising agitating at least part of said dispersion at an agitation frequency with said tunable agitation device.

The method may comprise generating electrical energy and/or storing electrical energy. In accordance with the herein-above, said method may further comprise changing the power of the redox flow battery by changing the agitation frequency of said tunable agitation device. In addition or alternatively, said method is further comprising changing the internal resistance of the redox flow battery by changing the agitation frequency of said tunable agitation device. Thus, controllably agitating the dispersion may not only allow tuning the power output of the RFB, but may also allow tuning of its energy storage capabilities (capacity, negative power, etc.) to the electricity supply at a particular moment.

As used herein, the singular forms "a", "an" and "the" are intended to include the plural forms as well, unless the context clearly indicates otherwise. The term "and/or" includes all combinations of one or more of the associated listed items. It will be understood that the terms "comprises" and/or "comprising" specify the presence of stated features but do not preclude the presence or addition of one or more other features.

For clarity and a concise description features are described herein as part of the same or separate embodiments, however, it will be appreciated that the scope of the invention may include embodiments having combinations of all or some of the features described.

## Claims

1. Redox flow battery that exhibits a tunable power output and/or a tunable storage capacity, said redox flow battery comprising an anodic compartment and a cathodic compartment that respectively comprise an anolyte fluid and a catholyte fluid of which at least one comprises a dispersion of particles of a redox-active component, wherein said redox flow battery further comprises a tunable agitation device that is configured to controllably gradually agitate at least part of said dispersion.

2. Redox flow battery according to the previous claim, wherein said tunable agitation device comprises a pulsating pump, for example a diaphragm pump, a variable displacement pump, a stirring device, a vibration device, an ultrasonic sound device, a piezo-electric pulsation device or a combination thereof.

3. Redox flow battery according to any of the previous claims, wherein said cathodic compartment comprises a catholyte fluid tank and said anodic compartment comprises an anolyte fluid tank, and wherein said tunable agitation device is configured to controllably gradually agitate at least part of the dispersion in the anodic fluid tank and/or cathodic fluid tank.

4. Redox flow battery according to any of the previous claims, wherein the anodic compartment comprises an anodic current collector and the cathodic compartment comprises a cathodic current collector, which collectors are separated by a membrane, preferably a physical separator (*e.g.* a sieve), an anionic or a cationic exchange membrane, more preferably a proton exchange membrane.

5. Redox flow battery according to any of the previous claims, further comprising a temperature control device and/or pressure control device configured to controllably set the temperature and/or pressure, respectively, of the anolyte and/or catholyte fluid.

6. Redox flow battery according to any of the previous claims, wherein said anolyte fluid and said catholyte fluid comprise organic redox-active components.

7. Redox flow battery according to any of the previous claims, wherein said catholyte fluid comprises methylthioninium salts, polyhydroquinone and/or an aminoxyl radical, preferably a piperidinyloxyl radical, more preferably a 2,2,6,6-tetraalkylpiperidin-1-yl)oxyl radical that is optionally substituted at the 4-position.

8. Redox flow battery according to any of the previous claims, wherein said anolyte fluid comprises one or more of methylthioninium salts such as methylene blue, viologen such as paraquat, and a conductive polymer such as naphtalene-1,4,5,8-tetracarboxylic acid dianhydride-ethylene diamine copolymer, polyaniline and polypyrrole.

9. Redox flow battery according to any of the previous claims, wherein said particles of the redox-active component comprise a solid carrier on which the redox-active component is immobilized.

10. Method of operating the redox flow battery according to any of the previous claims comprising agitating at least part of said dispersion at an agitation frequency with said tunable agitation device.

11. Method of operating the redox flow battery according to the previous claim, said method comprising generating electrical energy by said battery and said method further comprising changing the power of the redox flow battery by changing the agitation frequency of said tunable agitation device.

12. Method of operating the redox flow battery according to the any of claims 10-11, said method comprising generating electrical energy by said battery and said method further comprising changing the power of the redox flow battery by changing the displacement volume of the agitating device.

13. Method of operating the redox flow battery according to claim 10, said method comprising storing electrical energy in said battery by changing the agitation frequency of said tunable agitation device and/or by changing the displacement volume of the agitating device.

14. Method of operating the redox flow battery according to any of claims 10-13, said method further comprising changing the temperature and/or pressure of the anolyte and/or catholyte fluid.

15. Use of tunable agitation device to control the power output and/or the storage capacity of a redox flow battery.
